(19) Europäisches Patentamt
European Patent Office
Office européen des brevets

(11) **EP 4 239 592 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **23160084.2**

(22) Anmeldetag: **06.03.2023**

(51) Internationale Patentklassifikation (IPC):
**G06V 10/82** *(2022.01)* **G06T 7/00** *(2017.01)*
**G06V 20/59** *(2022.01)* **G06V 20/52** *(2022.01)*

(52) Gemeinsame Patentklassifikation (CPC):
**G06V 20/59; G06V 10/82; G06V 20/52**

(54) **COMPUTERIMPLEMENTIERTES VERFAHREN ZUM ERKENNEN EINES NEUEN OBJEKTES IN EINEM INNENRAUM EINES ZUGES**

COMPUTER-IMPLEMENTED METHOD FOR DETECTING A NEW OBJECT IN AN INTERIOR OF A TRAIN

PROCÉDÉ MIS EN OEUVRE PAR ORDINATEUR POUR DÉTECTER UN NOUVEL OBJET DANS UN ESPACE INTÉRIEUR D'UN TRAIN

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.03.2022 DE 102022202229**

(43) Veröffentlichungstag der Anmeldung:
**06.09.2023 Patentblatt 2023/36**

(73) Patentinhaber: **Siemens Mobility GmbH**
**80997 München (DE)**

(72) Erfinder: **Li, Haiyan**
**10117 Berlin (DE)**

(74) Vertreter: **Siemens Patent Attorneys**
**Postfach 22 16 34**
**80506 München (DE)**

(56) Entgegenhaltungen:
**WO-A1-2021/258664 US-A1- 2020 103 354**

• **BRUNO SAUVALLE ET AL: "Autoencoder-based background reconstruction and foreground segmentation with background noise estimation", ARXIV.ORG, CORNELL UNIVERSITY LIBRARY, 201 OLIN LIBRARY CORNELL UNIVERSITY ITHACA, NY 14853, 15 December 2021 (2021-12-15), XP091216392**

**Beschreibung**

Die Erfindung betrifft ein computerimplementiertes Verfahren zum Erkennen eines Objektes in einem Innenraum eines öffentlichen Verkehrsmittels, das nicht Teil der Einrichtung des Innenraums des öffentlichen Verkehrsmittels ist. Weiterhin betrifft die Erfindung einen Computer, der ausgebildet ist, das computerimplementierte Verfahren auszuführen. Zudem betrifft die Erfindung ein Computerprogramm.

Im Stand der Technik ist es bekannt, den Innenraum eines Zuges in Bezug auf das Vorhandensein von Personen mithilfe einer Kamera zu überprüfen. Dies ist beispielsweise erforderlich, bevor der Zug auf einem Abstellgleis abgestellt wird. Der Stand der Technik umfasst US 2020/103354 A1 (2020-04-02); BRUNO SAUVALLE ET AL: "Autoencoder-based background reconstruction and foreground segmentation with background noise estimation",ARXIV.ORG, CORNELL UNIVERSITY LIBRARY, 201 OLIN LIBRARY CORNELL UNIVERSITY ITHACA, NY 14853, 15. Dezember 2021; WO 2021/258664 A1 (2021-12-30).

Die Aufgabe der Erfindung besteht darin, ein verbessertes Verfahren bereitzustellen, das eine höhere Genauigkeit bei der Erkennung eines Objektes in einem Innenraum eines öffentlichen Verkehrsmittels zu ermitteln, das nicht Teil der Einrichtung des Innenraums des öffentlichen Verkehrsmittels ist. Die Aufgabe der Erfindung wird durch das vorgeschlagene Verfahren, den vorgeschlagenen Computer und das vorgeschlagene Computerprogramm gelöst.

In den abhängigen Ansprüchen sind Weiterbildungen der Erfindung angegeben.

Es wird ein computerimplementiertes Verfahren zum Erkennen eines Objektes in einem Innenraum eines öffentlichen Verkehrsmittels vorgeschlagen. Das Objekt ist dadurch definiert, dass das Objekt nicht Teil der Einrichtung des Innenraums des öffentlichen Verkehrsmittels ist. Das Objekt ist beispielsweise ein Mensch, ein Tier oder ein Gegenstand wie eine Tasche usw. Mithilfe dieses Verfahrens kann beispielsweise vor dem Abstellen des öffentlichen Verkehrsmittels auf einem Abstellbereich überprüft werden, ob sich im Innenraum des öffentlichen Verkehrsmittels noch ein Mensch, ein Tier oder ein Gegenstand befindet. Dabei wird von einer Kamera ein Bild des Innenraumes des öffentlichen Verkehrsmittels aufgenommen und das aufgenommene Bild wird mithilfe eines trainierten neuronalen Netzes in ein rekonstruiertes Bild umgewandelt.

Das neuronale Netz ist als gefalteter Autoencoder ausgebildet. Das neuronale Netz wurde mit Bildern des Innenraumes des öffentlichen Verkehrsmittels ohne Objekte, die nicht Teil der Einrichtung des Innenraumes sind, trainiert. Bei dem Trainieren des neuronalen Netzes wurde ein selbstlernendes Verfahren, d.h. ein unüberwachtes Lernverfahren, eingesetzt. Das trainierte neuronale Netz ist in der Lage, Bilder von Innenräumen des öffentlichen Verkehrsmittels ohne Objekte von Bildern des Innenraumes von öffentlichen Verkehrsmitteln mit Objekten, die nicht Teil der Einrichtung des Innenraumes sind, zu unterscheiden.

Das rekonstruierte Bild wird mit dem aufgenommenen Bild verglichen. Bei dem Vergleich des aufgenommenen Bildes mit dem rekonstruierten Bild wird ein pixelweiser Vergleich vorgenommen. Bei dem Vergleich des Pixels des aufgenommenen Bildes mit dem Pixel des rekonstruierten Bildes wird ein Helligkeitsunterschied und/oder ein Farbunterschied zwischen den Pixeln ermittelt. Dabei werden insbesondere alle Pixel des aufgenommenen Bildes mit den jeweiligen gleichen Pixeln des rekonstruierten Bildes verglichen. Ein Pixel des rekonstruierten Bildes wird als abweichender Pixel erkannt, wenn z.B. der Helligkeitsunterschied und/oder der Farbunterschied einen Schwellwert überschreitet. Der Schwellwert kann beispielsweise 5% des Helligkeitswertes oder des Farbwertes des Pixels des aufgenommenen Bildes sein. Anhand der abweichenden Pixel wird ein Objekt im Innenraum des öffentlichen Verkehrsmittels erkannt, wenn beispielsweise die Anzahl der Pixel einen vorgegebenen Grenzwert überschreitet und/oder die abweichenden Pixel in einer bestimmten Form oder Struktur angeordnet sind.

Abhängig von der gewählten Ausführung können auch Gruppen von Pixeln des aufgenommenen Bildes mit den entsprechenden Gruppen von Pixeln des rekonstruierten Bildes verglichen werden. Bei dem Vergleich der Gruppe der Pixel des aufgenommenen Bildes mit der Gruppe der Pixel des rekonstruierten Bildes wird ein Helligkeitsunterschied und/oder ein Farbunterschied zwischen den Gruppen der Pixel ermittelt. Dabei werden insbesondere alle Pixel des aufgenommenen Bildes gruppenweise mit den jeweiligen gleichen Gruppen der Pixel des rekonstruierten Bildes verglichen. Eine Gruppe von Pixeln des rekonstruierten Bildes wird als abweichende Pixel erkannt, wenn z.B. der mittlere Helligkeitsunterschied und/oder der mittlere Farbunterschied der Gruppe der Pixel einen vorgegebenen Schwellwert überschreitet. Der Schwellwert kann z.B. 5% der mittleren Helligkeit und/oder des mittleren Farbwertes der Gruppe der Pixel des aufgenommenen Bildes sein.

Nach Erkennen eines Objektes im Innenraum des öffentlichen Verkehrsmittels, das nicht Teil der Einrichtung ist, wird ein Signal ausgegeben.

Auf diese Weise ist es möglich, mit einem automatischen Verfahren das Vorhandensein von Objekten im Innenraum eines öffentlichen Verkehrsmittels schnell und sicher zu überprüfen. Das Objekt kann beispielsweise ein Mensch, ein Tier oder ein anderer Gegenstand wie z.B. eine Tasche sein. Das beschriebene Verfahren weist den Vorteil auf, dass das Verfahren präzise ist und unabhängig von unterschiedlichen Lichtverhältnissen gut und sicher funktioniert. Zudem bietet das vorgeschlagene Verfahren den Vorteil, dass es einfach umzusetzen ist, da das neuronale Netz mithilfe eines selbstlernenden Verfahrens mit Trainingsbildern trainiert wurde. Somit ist es nicht erforderlich, die Pixel der Trainingsbilder einzeln zu labeln. Damit ist der Aufwand zum Trainieren des neuronalen Netzes deutlich vereinfacht. Versuche haben gezeigt, dass übliche Bilder einer Kamera eines öffentlichen Verkehrsmittels, die insbesondere keine Objekte im Innenraum des öffentlichen Verkehrsmittels zeigen, für das Training des Verfahrens verwendet werden können. Somit können zum Trainieren des neuronalen Netzes Bilder von leeren Innenräumen des öffentlichen Verkehrsmittels, d.h. Bilder von Innenräumen des öffentlichen Verkehrsmittels, die nur die Einrichtung des Innenraumes des öffentlichen Verkehrsmittels zeigen, verwendet werden.

Das neuronale Netz kann in Form eines Computerprogrammes und/oder in Form einer Hardware realisiert sein. Beispielsweise ist das neuronale Netz in Form eines gefalteten Autoencoders ausgebildet. Neuronale Netze in Form eines gefalteten Autoencoders eignen sich besonders für das Erstellen eines rekonstruierten Bildes. Das rekonstruierte Bild weist im Gegensatz zu dem aufgenommenen Bild eine geringere Genauigkeit in Bezug auf Helligkeitswerte und/oder Konturen der im Bild dargestellten Gegenstände auf. Somit sind die Gegenstände im rekonstruierten Bild unschärfer bzw. nicht so präzise und geradlinig dargestellt. Weiterhin hat sich gezeigt, dass das Trainieren des neuronalen Netzes vorzugsweise nur mit Bildern von Innenräumen ohne Objekte, die nicht zur Einrichtung des Innenraumes gehören, die Wahrscheinlichkeit erhöht, dass mit dem Verfahren Bilder von Innenräumen mit Objekten, die nicht zur Einrichtung des Innenraumes gehören, mit größerer Sicherheit erkannt werden.

Abhängig von der gewählten Ausführungsform kann beispielsweise bei einem Schwarzweißbild mit Grauwerten ein Helligkeitsunterschied zwischen den zu vergleichenden Pixeln für die Erkennung eines abweichenden Pixels verwendet werden. Liegen das aufgenommene Bild und das rekonstruierte Bild in Form von Farbbildern vor, so kann zur Erkennung eines abweichenden Pixels die Helligkeit und/oder der Farbunterschied zum Erkennen eines abweichenden Pixels verwendet werden.

Wird mithilfe des Verfahrens beispielsweise ein Objekt, d.h. ein Mensch oder ein Gegenstand, im Innenraum des öffentlichen Verkehrsmittels erkannt, so gibt das Verfahren ein Signal aus. Das ausgegebene Signal kann beispielsweise vom Computer dazu verwendet werden, um über einen Lautsprecher eine Anweisung an die Person im Innenraum des öffentlichen Verkehrsmittels abzugeben. Weiterhin kann das Signal eine Bedienperson darauf hinweisen, mithilfe der Kamera das im Innenraum befindliche Objekt genauer zu untersuchen. Somit kann eine Bedienperson entscheiden, ob das öffentliche Verkehrsmittel trotzdem abgestellt werden kann, oder ob das Objekt von einer Bedienperson aus dem öffentlichen Verkehrsmittel entfernt werden soll.

In einer weiteren Ausführungsform wird das Differenzbild, das die abweichenden Pixel aufweist, einem trainierten Klassifikator zugeführt. Der trainierte Klassifikator wurde trainiert, um anhand der abweichenden Pixel eines Differenzbildes einen Innenraum eines öffentlichen Verkehrsmittels auf das Vorliegen eines Objektes zu überprüfen und das Vorliegen eines Objektes zu erkennen. Das Verwenden des trainierten Klassifikators verbessert die Qualität des Verfahrens und erhöht die Wahrscheinlichkeit, dass ein Objekt im Innenraum des öffentlichen Verkehrsmittels erkannt wird, das nicht Teil der Einrichtung des Innenraums des öffentlichen Verkehrsmittels ist. Der Klassifikator kann beispielsweise in Form einer Support-Vector-Machine oder in Form eines trainierten neuronalen Netzes ausgebildet sein. Mithilfe des Klassifikators ist es möglich, nicht nur die Anzahl der Pixel, sondern auch die Form der Anordnung der abweichenden Pixel bei der Bewertung des Innenraumes zu trainieren und für die Entscheidung zu berücksichtigen, ob sich ein Objekt, das nicht Teil der Einrichtung des Innenraums des öffentlichen Verkehrsmittels ist, im Innenraum befindet. Somit wird die Wahrscheinlichkeit erhöht, dass ein Objekt, das nicht Teil der Einrichtung des Innenraums des öffentlichen Verkehrsmittels ist, richtig erkannt wird.

In einer weiteren Ausführungsform wird das von der Kamera aufgenommene Bild vor der weiteren Verarbeitung in der Größe reduziert, d.h. die Anzahl der Pixel wird verkleinert. Dabei wird wenigstens ein Bereich des Bildes entfernt, der außerhalb eines möglichen Aufenthaltsbereiches einer Person im Innenraum liegt. Auf diese Weise kann die Anzahl der Pixel reduziert werden, ohne die Qualität des Verfahrens für die Erkennung einer Person im Innenraum des öffentlichen Verkehrsmittels zu reduzieren. Das auf diese Weise verkleinerte Bild wird als vorverarbeitetes Bild für das weitere Verfahren verwendet. Vorzugsweise wird auch das Training des neuronalen Netzes mit Trainingsbildern durchgeführt, die eine reduzierte Größe gegenüber der von der Kamera aufgenommenen Bildgröße aufweisen. Auf diese Weise wird die Bearbeitungszeit reduziert und Speicherplatz eingespart.

In einer weiteren Ausführungsform wird das aufgenommene Bild in der Weise vorverarbeitet, dass wenigstens ein Randbereich des Bildes entfernt wird. Insbesondere kann der Randbereich nur eine Seite eines rechteckigen Bildes, insbesondere zwei oder alle Seiten des rechteckigen Bildes betreffen. Abhängig von der gewählten Ausführungsform können von dem aufgenommenen Bild unterschiedlich breite Randbereiche der verschiedenen Seiten des Bildes vor der weiteren Verarbeitung abgeschnitten werden. Somit kann eine auf die Bildaufnahmesituation der Kamera optimierte Gestaltung des Bildes erhalten werden. Somit kann Rechenzeit und/oder Speicherbedarf eingespart werden.

In einer weiteren Ausführungsform wird das aufgenommene Bild vor der Verarbeitung in der Weise vorverarbeitet, dass Bereiche des aufgenommenen Bildes entfernt werden, die oberhalb einer vorgegebenen Höhe des Innenraumes des öffentlichen Verkehrsmittels liegen. Die vorgegebene Höhe kann zwischen 1,5 m und 2 m ausgehend von einem Boden des Innenraumes des öffentlichen Verkehrsmittels berechnet werden. Versuche haben gezeigt, dass es für die Erkennung einer Person mit dem beschriebenen Verfahren ausreichend ist, wenn das Bild den Innenraum ausgehend vom Boden bis zu einer vorgegebenen Höhe von beispielsweise 1,5 m bis 2 m darstellt. Bereiche des Bildes oberhalb dieser Höhe sind für die Erkennung einer Person nicht erforderlich. Auch auf diese Weise wird Bearbeitungszeit und Speicherbedarf eingespart.

In einer weiteren Ausführungsform wird als Klassifikator, ein trainiertes zweites neuronales Netz verwendet. Das zweite neuronale Netz wurde mit Differenzbildern mit Objekten, die nicht Teil der Einrichtung des Innenraums des öffentlichen Verkehrsmittels sind, und mit Differenzbildern ohne Objekte, die nicht Teil der Einrichtung des Innenraums des öffentlichen Verkehrsmittels sind, mit einem überwachten Lernverfahren zum Erkennen eines Innenraumes mit einem Objekt, das nicht Teil der Einrichtung des Innenraums des öffentlichen Verkehrsmittels ist, trainiert.

In einer weiteren Ausführungsform ist das erste neuronale Netz mit Bildern von Innenräumen ohne Objekte, die nicht Teil der Einrichtung des Innenraums des öffentlichen Verkehrsmittels sind, trainiert worden, um aus einem aufgenommenen Bild ein rekonstruiertes Bild zu erzeugen. Vorzugsweise wurden auch bei dem Training vorverarbeitete Bilder verwendet, die eine kleinere Größe als die tatsächlich von der Kamera aufgenommenen Bilder aufweisen. Beispielsweise wurden bei den vorverarbeiteten Bildern Bereiche der Bilder, insbesondere Randbereiche der Bilder entfernt. Dadurch weist das vorverarbeitete Bild weniger Pixel auf. Somit werden auch beim Training Bearbeitungszeit und Speicherbedarf eingespart.

In einer weiteren Ausführungsform wird anhand einer Anzahl der abweichenden Pixel und/oder anhand von Positionen der abweichenden Pixel ein Objekt, das nicht Teil der Einrichtung des Innenraums des öffentlichen Verkehrsmittels ist, im Innenraum des öffentlichen Verkehrsmittels erkannt. Neben der Anzahl der abweichenden Pixel können auch die Positionen der abweichenden Pixel einen Hinweis auf ein Objekt geben, das nicht Teil der Einrichtung ist. Dadurch wird die Wahrscheinlichkeit erhöht, dass ein Objekt, insbesondere ein Mensch, ein Tier oder ein Gegenstand mithilfe des beschriebenen Verfahrens sicher erkannt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

FIG 1 in einer schematischen Darstellung einen Wagen eines öffentlichen Verkehrsmittels,

FIG 2 ein erstes Bild einer Kamera des Wagens,

FIG 3 ein vorbearbeitetes erstes Bild der FIG 2,

FIG 4 ein zweites Bild eines weiteren Wagens,

FIG 5 ein vorverarbeitetes zweites Bild der FIG 4,

FIG 6 ein drittes Bild eines weiteren Wagens,

FIG 7 ein vorbearbeitetes drittes Bild der FIG 6,

FIG 8 in einer schematischen Darstellung einen Teil des Computers, der das Verfahren ausführt,

FIG 9 eine schematische Darstellung des Verfahrens,

FIG 10 eine Ausführungsform des Klassifikators als neuronales Netz,

FIG 11 in einer linken Spalte Differenzbilder mit Personen und einer rechten Spalte Differenzbilder ohne Person, und

FIG 12 ein Diagramm mit der Darstellung von abweichenden Pixeln für nummerierte Testbilder

zeigt.

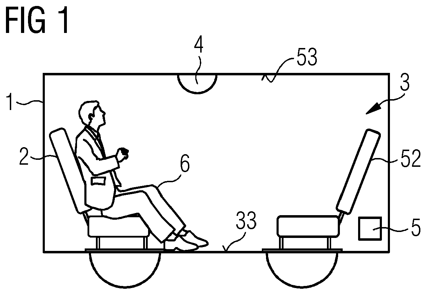

FIG 1 zeigt in einer schematischen Darstellung einen Wagen 1 eines öffentlichen Verkehrsmittels, der einen Innenraum 3 aufweist. Das öffentliche Verkehrsmittel kann **z.B.** ein Zug, ein Bus, eine U-Bahn oder eine Straßenbahn sein. Im Innenraum 3 des Wagens 1 sind als Einrichtung zwei Sitze 2, 52 dargestellt. Auf dem Sitz 2 sitzt eine Person **6**. An einer Decke 53 des Innenraumes 3 ist eine Kamera 4 vorgesehen, die in dem dargestellten Ausführungsbeispiel von oben ein Bild vom Innenraum 3 aufnimmt. Die Kamera 4 ist **z.B.** eine digitale Kamera, insbesondere eine CCTV Kamera. Die Kamera 4 steht mit einem Computer 5 in Verbindung, der in dem dargestellten Ausführungsbeispiel zwischen einem Boden 33 des Innenraumes 3 und dem zweiten Sitz 52 angeordnet ist. Die Verbindung zwischen der Kamera 4 und dem Computer 5 kann drahtlos oder über eine elektrische Leitung ausgebildet sein. Der Computer 5 verfügt über einen Prozessor und einen Programm- und Datenspeicher.

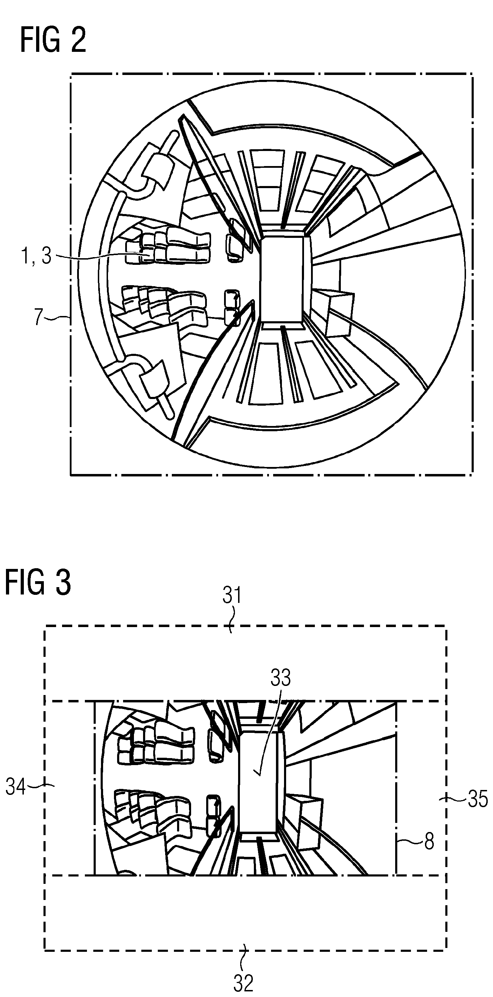

FIG 2 zeigt in einer schematischen Darstellung ein erstes Bild 7, das von der Kamera 4 vom Innenraum 3 aufgenommen wurde. Aufgrund der Aufnahmeoptik der Kamera 4 weist das erste Bild 7 die Form eines Quadrates auf, wobei der Innenraum 3 auf einer Kreisfläche abgebildet ist. In dem ersten Bild 7 ist der Innenraum 3 mit einer Einrichtung des Wagens des öffentlichen Verkehrsmittels ohne ein Objekt dargestellt, das nicht Teil der Einrichtung des Innenraums des öffentlichen Verkehrsmittels ist. Die Einrichtung umfasst Stühle, Teiltrennwände, Haltestangen usw. Die Einrichtung ist fest mit dem Wagen 1 verbaut. Als Objekt wird ein Objekt verstanden, das nicht Teil der Einrichtung des Innenraumes 3 des Wagens 1 ist. Das Objekt ist z.B. ein Mensch, ein Tier, ein Gegenstand wie eine Tasche oder ein Fahrrad usw. Das erste Bild 7 kann als Schwarzweißbild mit Graustufen oder als Farbbild aufgenommen werden. Beispielsweise kann ein Farbbild für eine vereinfachte Weiterverarbeitung in ein Grauwertbild, d.h. ein Schwarzweißbild mit Grauwertstufen umgewandelt werden. Das erste Bild 7 ist z.B. im Datenspeicher des Computers gespeichert. Die Umwandlung des Farbbildes in ein Grauwertbild kann vom Computer 5 mit einem entsprechenden Softwareprogramm durchgeführt werden.

FIG 3 zeigt ein vorbearbeitetes erstes Bild 8, das vom Computer 5 anhand des ersten Bildes 7 erstellt wurde. Das vorbearbeitete erste Bild 8 weist einen gegenüber dem ersten Bild 7 kleineren Bildausschnitt auf. Das vorbearbeitete erste Bild 8 weist die Form eines Rechteckes auf. Bei dem vorbearbeiteten ersten Bild 8 wurden äußere Randbereiche des ersten Bildes 7 abgeschnitten. Dabei kann die Anzahl der Pixel des Bildes z.B. um 10% oder mehr, insbesondere um 20% oder mehr reduziert werden. Im dargestellten Ausführungsbeispiel wurden ein erster Längsbereich 31 und ein zweiter Längsbereich 32, die entlang von gegenüber liegenden Längsseiten des Wagens 1 verlaufen, abgeschnitten. Dabei wurden beispielsweise Bildbereiche des ersten Bildes 7 abgeschnitten, die über einer vorgegebenen Höhe von beispielsweise 1,5 m bis 2 m über dem Boden 33 des Wagens 1 angeordnet sind.

Zudem wurden Querbereiche 34, 35 des Bildes abgeschnitten, die an gegenüber liegenden Querseiten des Wagens 1 verlaufen. Die Querbereiche 34, 35 stellen Teilbereiche des Bildes dar, die oberhalb einer vorgegebenen Höhe über dem Boden 33 von beispielsweise 1,5 m bis 2 m liegen. Abhängig von der gewählten Ausführungsform kann das vorbearbeitete erste Bild 8 auch auf andere Weise zugeschnitten werden, um die Größe des Bildes, d.h. die Anzahl der Pixel zu reduzieren, ohne dass eine Information verloren geht, die das Erkennen eines Objektes, insbesondere eines Menschen im Wagen 1 verschlechtern würde. Versuche haben gezeigt, dass durch diese Verkleinerung des ersten Bildes 7 zu dem vorbearbeiteten ersten Bild 8 Rechenzeit und Speicherbedarf eingespart werden kann, ohne, dass das Ergebnis des Verfahrens verschlechtert wird.

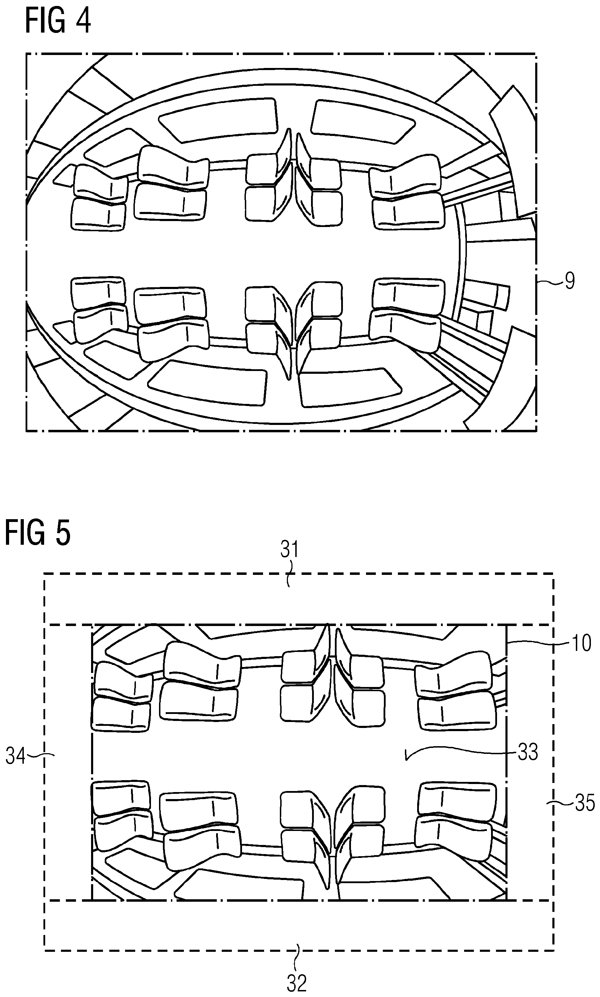

FIG 4 zeigt ein von einer Kamera aufgenommenes zweites Bild 9, das von einem Innenraum eines weiteren Wagens eines öffentlichen Verkehrsmittels aufgenommen wurde. Das zweite Bild 9 weist aufgrund der Optik der Kamera eine rechteckige Fläche auf. Zudem ist der Innenraum des weiteren Wagens gegenüber dem Innenraum des Wagens 1 der FIG 2 unterschiedlich gestaltet. Auch das zweite Bild 9 kann in der Größe reduziert werden. FIG 5 zeigt ein vorbearbeitetes zweites Bild 10, das vom Computer 5 aufgrund des zweites Bildes 9 erstellt wurde. Dabei wurden Längsbereiche 31, 32 und Querbereiche 34, 35 des zweiten Bildes 9 abgeschnitten. In dem dargestellten Beispiel des vorbearbeiteten zweiten Bildes 10 wurden Bereiche des zweiten Bildes 9 abgeschnitten, die über einer vorgegebenen Höhe gegenüber dem Boden 33 des weiteren Wagens liegen. Abhängig von der gewählten Ausführungsform kann das vorbearbeitete erste Bild 8 auch auf andere Weise zugeschnitten werden, um die Größe des zweiten Bildes, d.h. die Anzahl der Pixel zu reduzieren, ohne dass eine Information verloren geht, die das Erkennen eines Objektes, insbesondere eines Menschen im weiteren Wagen verschlechtern würde.

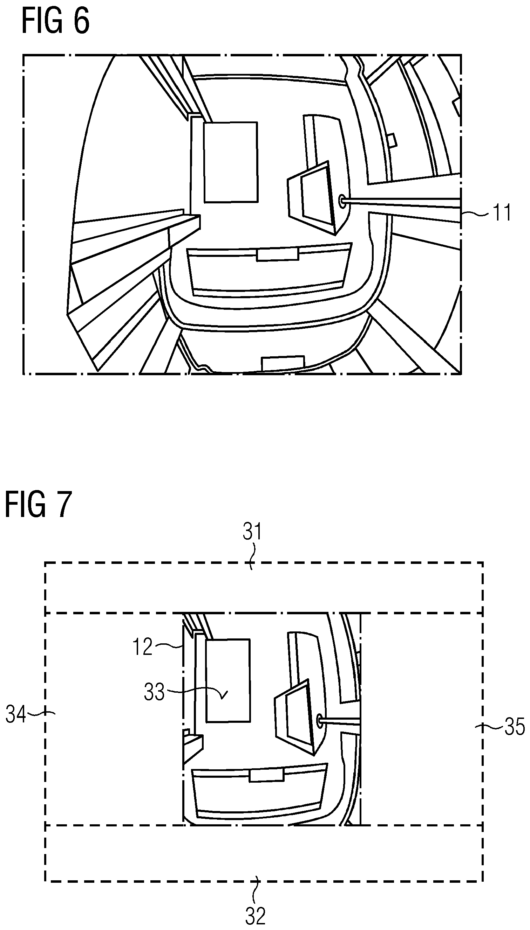

FIG 6 zeigt ein drittes Bild 11, das von einer Kamera von einem Innenraum eines weiteren Wagens aufgenommen wurde. Das dritte Bild 11 zeigt einen anderen Innenraum als das erste oder zweite Bild 7, 9. Auch das dritte Bild 11 kann analog zu dem ersten und zweiten Bild 7, 9 in der Größe verkleinert werden, indem Randbereiche 31, 32, 34, 35 des dritten Bildes 11 abgeschnitten werden, wie in FIG 7 in Form des vorbearbeiteten dritten Bildes 12 dargestellt ist.

Die Vorbearbeitung der Bilder der FIG 2, 4, 6 zu den Bildern der FIG 3, 5 bzw. 7 kann abhängig von der Ausführungsform der Kamera 4 entweder direkt in der Kamera 4 durch einen entsprechenden Prozessor mit einer entsprechenden Software oder vom Computer 5 durchgeführt werden. Abhängig von der gewählten Ausführungsform können die abzuschneidenden Längsbereiche 31, 32 und/oder Querbereiche 34, 35 auch von einer Bedienperson individuell angepasst werden. Somit können die Längsbereiche 31, 32 und/oder die Querbereiche 34, 35 auch andere Flächenformen als rechteckige Flächenformen aufweisen.

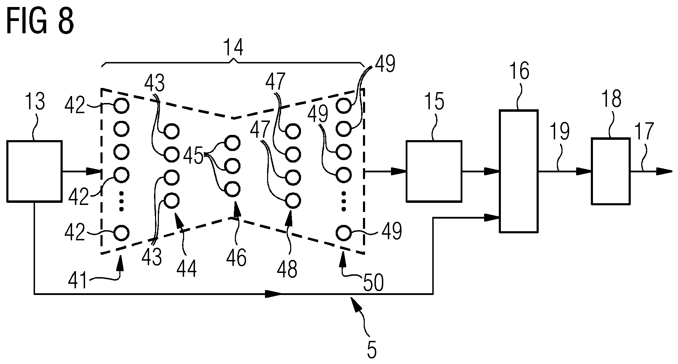

FIG 8 zeigt in einer schematischen Darstellung einen Aufbau eines Teils des Computers 5, mit dem das computerimplementierte Verfahren zum Erkennen eines Objektes in einem Innenraum eines Wagens des öffentlichen Verkehrsmittels ausgeführt werden kann. Der Computer 5 weist beispielsweise ein erstes neuronales Netz 14 auf, das in diesem Beispiel als Autoencoder ausgebildet ist. Das neuronale Netz 14 ist als Softwareprogramm und/oder als Hardwareschaltung ausgebildet.

Der Autoencoder ist ein neuronales Netz, das eine Identitätsfunktion auf nicht überwachte Weise erlernt, um die ursprüngliche Eingabe zu rekonstruieren und dabei die Daten zu komprimieren, um eine effizientere und komprimierte Darstellung zu finden. Der Autoencoder besteht aus einem Encoder-Netzwerk und einem Decoder-Netzwerk. Das Encoder-Netzwerk übersetzt die ursprüngliche hochdimensionale Eingabe in einen latenten niedrigdimensionalen Code. Das Decoder-Netzwerk gewinnt die Daten aus dem Code wieder zurück. Die abnehmende Anzahl von Neuronen in dem Decodier-Netzwerk zwingt den Autoencoder zu einer Dimensionalitätsreduktion. Dies kann nur erreicht werden, indem das neuronale Netz lernt, unwichtige Informationen in den Eingangsmerkmalen der Bilder zu vernachlässigen.

Der Autoencoder enthält eine durch einen ersten Parameter $\phi$ parametrisierte Kodierfunktion g und eine durch einen zweiten Parameter $\theta$ parametrisierte Dekodierfunktion f. Der für die Eingabe x in der Kompressionsschicht 46 gelernte niedrigdimensionale Code ist z=g$\phi$(x) und die rekonstruierte Eingabe am Ausgang der Ausgangsschicht ist x'=f$\theta$(g$\phi$(x)).

Die Parameter $(\theta,\phi)$ werden zusammen gelernt, um ein zu dem zugeführten Bild 13 rekonstruiertes Bild 15 zu erzeugen, das mit dem zugeführten Bild x≈f$\theta$(g$\phi$(x)) identisch ist, oder anders gesagt, der Autoencoder wird trainiert, um eine Identitätsfunktion zu lernen.

Es gibt verschiedene Metriken, um den Unterschied zwischen zwei Bildern zu quantifizieren, z. B. die Kreuzentropie, wenn die Aktivierungsfunktion sigmoid ist, oder einfach den MSE-Verlust LAE:

```
LAE(Θ,φ)=ln∑i=1n(x(i)-fθ(gφ(x(i))))2
```

Autoencoder werden auf die gleiche Weise trainiert, wie ein normales neuronales Feedforward-Netzwerk. Wie bereits bei dem normalen neuronalen Netz, sind die Schichten des Autoencoders durch Gewichte miteinander verbunden.

Für einen Eingangsvektor x wird ein Produkt zwischen dem Eingangsvektor x und der Gewichtsmatrix W gebildet, die die Eingangsschichten mit der ersten versteckten Schicht verbindet. Nach diesem Schritt wird auf das Ergebnis des Produkts eine nichtlineare Funktion wie Tanh ReLU oder Sigmoid angewendet.

Dieser Vorgang wird für jede Schicht wiederholt, bis die Kompressionsschicht erreicht ist. Hier werden die versteckten Neuronen in der Regel durch den Vektor z dargestellt, der die latente Repräsentation des Eingangsvektors x ist. Dies war der Kodierungsschritt, der durch die folgenden Gleichungen zusammengefasst werden kann:

$$\vec{a_1} = \sigma(W_1 * \vec{x})$$

$$\vec{z} = \sigma(W_2 * \vec{a_1})$$

Hierbei stellt der Vektor $\vec{x}$ den Eingangsvektor mit den Eingangswerten, der Vektor $\vec{a_1}$ die Werte der Neuronen in der ersten verborgenen Schicht des neuronalen Netzes und der Vektor $\vec{z}$ die Werte der Neuronen in der Kompressionsschicht dar. Sigma $(\sigma)$ ist eine beliebige nichtlineare Aktivierungsfunktion. W1, W2 sind die jeweiligen Gewichtsmatrizen.

Während des Dekodierungsschritts wird der latente Vektor $\vec{z}$ als eine neue Eingabe verwendet und es wird der gleiche Prozess wie zuvor wiederholt, nämlich die Berechnung von Produkten und die Anwendung von Aktivierungsfunktionen. Die endgültige Ausgabe des Netzes ist der Vektor $\hat{\vec{x}}$, der die rekonstruierte Eingabe des Vektors $\vec{x}$ darstellt. Die Dekodierung wird durch die folgenden Gleichungen beschrieben:

$$\vec{a_2} = \sigma(W_3 * \vec{z})$$

$$\hat{\vec{x}} = \sigma(W_4 * \vec{a_2})$$

Wie bereits erwähnt, wird der Autoencoder so trainiert, dass die Differenz zwischen dem Eingabevektor $\vec{x}$ und seinem rekonstruierten Gegenstück $\hat{\vec{x}}$ verringert wird, wobei W3 und W4 entsprechende Matrizen darstellen, und wobei $\vec{a_2}$ den Vektor nach der Kompressionsschicht darstellt. Dieses Ziel kann als Minimierung der Verlustfunktion des mittleren quadratischen Fehlers formuliert werden. Die Minimierung der Verlustfunktion kann hierbei durch den regulären Gradientenabstieg erfolgen.

$$L(\theta) = \frac{1}{N}\sum_{i=0}^{N}\left(\vec{x_i} - \hat{\vec{x_i}}\right)^2$$

Die Minimierung der MSE-Verlustfunktion $L(\theta)$ verringert die Differenz zwischen dem Eingangsvektor $\vec{x}$ und dem

Ausgangsvektor $\hat{\vec{x}}$. Das führt automatisch zu einer besseren Kodierung des Eingabevektors $\vec{x}$.

Dem neuronalen Netz 14 wird ein weiteres Bild 13 auf einer Eingangsschicht 41 zugeführt. In der dargestellten Ausführungsform ist das erste neuronale Netz 14 als Autoencoder ausgebildet. Das weitere Bild 13 wird von der Kamera 4 geliefert. Beispielsweise kann das weitere Bild 13 ein von der Kamera aufgenommenes Bild gemäß den FIG 2, 4, 6 darstellen. Zudem kann abhängig von der gewählten Ausführungsform das weitere Bild 13 ein auf Basis des von der Kamera aufgenommenen Bildes vorbearbeitetes Bild gemäß den FIG 3, 5, 7 ausgebildet sein.

Die Eingangsschicht 41 des neuronalen Netzes weist z.B. so viele Eingangsneuronen 42 auf, wie das weitere Bild 13 Bildpixel aufweist. Jeweils ein Bildpixel wird einem Eingangsneuron 42 zugeführt. Jedes Eingangsneuron 42 ist mit jedem Neuron 43 einer ersten versteckten Schicht 44 verbunden. Zudem ist jedes Neuron 43 der ersten versteckten Schicht 44 mit jedem Neuron 45 der Kompressionsschicht 46 verbunden. Die erste versteckte Schicht 44 weist weniger Neuronen 43 als die Eingangsschicht 41 auf. Die Kompressionsschicht 46 weist weniger Neuronen 45 als die erste versteckte Schicht 44 auf.

Jedes Neuron 45 der Kompressionsschicht 46 ist mit jedem Neuron 47 einer zweiten versteckten Schicht 48 verbunden. Die zweite versteckte Schicht 48 weist mehrere Neuronen als die Kompressionsschicht 46 auf. Beispielsweise kann die zweite versteckte Schicht 48 die gleiche Anzahl an Neuronen wie die erste versteckte Schicht 44 aufweisen. Jedes Neuron 47 der zweiten versteckten Schicht 48 ist mit einem Neuron 49 einer Ausgangsschicht 50 verbunden. Die Anzahl der Neuronen 49 der Ausgangsschicht 50 kann der Anzahl der Neuronen 42 der Eingangsschicht 41 entsprechen.

Abhängig von der gewählten Ausführung kann das neuronale Netz 14 auch eine andere Form eines Autoencoders aufweisen. Weitere Beispiele von Autoencodern sind z.B. gefaltete Autoencoder, wie in "Image Segmentation Using Deep Learning: A Survey" von Shervin Minae et al., ar Xiv:2001.05566v5 in Kapitel 3.3 Encoder Decoder Based Models beschrieben.

Das neuronale Netz 14, **d.h.** in dem dargestellten Ausführungsbeispiel der Autodecoder, ist in einem unüberwachten Lernverfahren in der Weise trainiert worden, dass die Ausgangsschicht 50 ein rekonstruiertes weiteres Bild 15 des weiteren Bildes 13 erstellt. Für das unüberwachte Lernen des neuronalen Netzes 14 können Bilder der Kameras gemäß den FIG 2, 4, 6 oder vorbearbeitete Bilder der Kameras gemäß den FIG 3, 5 oder 7 verwendet werden. Vorzugsweise werden zum Training nur Bilder von Innenräumen ohne Objekte verwendet, **d.h.** die Bilder zeigen nur die Einrichtung des Wagens des öffentlichen Verkehrsmittels, ohne, dass sich darin ein Objekt, **d.h.** eine Tasche, ein Tier oder eine Person befindet. Beispielsweise wird für jede Kamera ein neuronales Netz 14 trainiert, wobei zum Training nur Bilder des Innenraums ohne Objekte, die nicht zur Einrichtung gehören, verwendet werden, wobei die Bilder des Innenraumes bei verschiedenen Lichtverhältnissen aufgenommen wurden. Somit wird jedes neuronale Netz 14 genau auf die optische Abbildung des jeweiligen Innenraumes trainiert. Abhängig von der gewählten Ausführung kann ein neuronales Netz 14 auch mit Bildern von verschiedenen Innenräumen trainiert werden, die vorzugsweise jeweils kein Objekt aufweisen, das nicht zur Einrichtung des Innenraumes des öffentlichen Verkehrsmittels gehört. Damit können neuronale Netze eingespart werden, um für verschiedene Innenräume, rekonstruierte Bilder zu erstellen.

Das neuronale Netz 14 ist darauf trainiert, ein Bild von einem Innenraum ohne ein Objekt, das nicht zur Einrichtung des Innenraumes gehört, zu rekonstruieren. Somit ist die Qualität des vom neuronalen Netz rekonstruierten Bildes eines Innenraumes mit einem Objekt, das nicht zur Einrichtung des Innenraumes gehört, schlechter, da diese Rekonstruktion nicht trainiert wurde. Somit sind auch die abweichenden Pixel bei der Bildung eines Differenzbildes zwischen einem Bild der Kamera und dem auf Basis des Bildes der Kamera durch das neuronale Netz rekonstruierten Bildes deutlich mehr als bei einem Differenzbild zwischen einem Bild eines Innenraumes ohne ein Objekt, das nicht zur Einrichtung gehört, und einem auf Basis des Bildes durch das trainierte neuronale Netz rekonstruierten Bildes. Somit eignet sich das trainierte neuronale Netz 14 sehr gut, um einen Innenraum mit einem Objekt, das nicht Teil der Einrichtung des Innenraumes ist, zu erkennen.

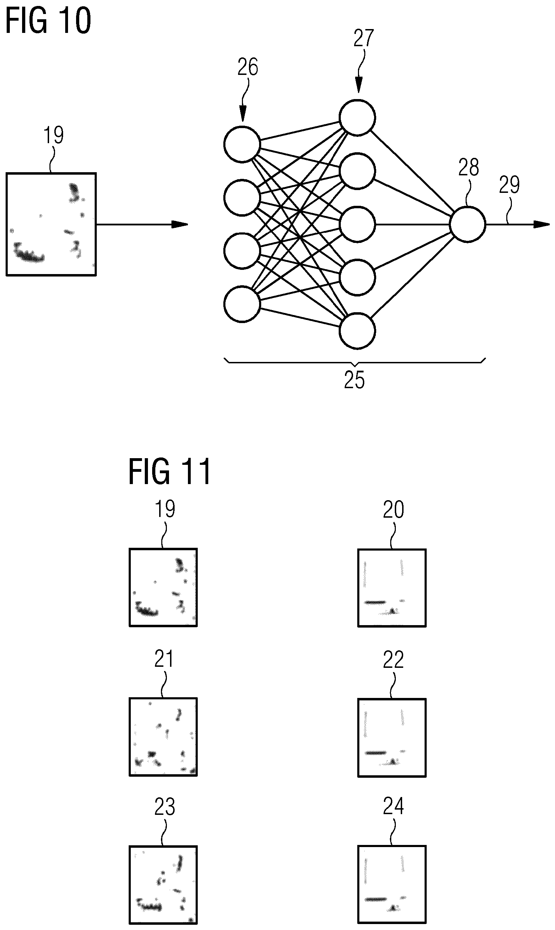

Das rekonstruierte weitere Bild 15 und das weitere Bild 13 werden anschließend einer Verarbeitungseinheit 16 zugeführt. Die Verarbeitungseinheit 16 ermittelt ein Differenzbild zwischen dem weiteren Bild 13 und dem rekonstruierten weiteren Bild 15. Dabei wird das rekonstruierte weitere Bild 15 mit dem aufgenommenen weiteren Bild 13 verglichen, wobei bei dem Vergleich das aufgenommene weitere Bild 13 mit dem rekonstruierten weiteren Bild 15 pixelweise verglichen wird. Bei dem Vergleich werden für jedes Pixel des aufgenommenen weiteren Bildes 13 und des rekonstruierten weiteren Bildes 15 ein Helligkeitsunterschied und/oder ein Farbunterschied zwischen den Pixeln ermittelt. Somit werden Differenzbilder erhalten, wie beispielsweise in FIG 11 dargestellt ist. Dabei zeigen die Differenzbilder 20, 22, 24 in der rechten Spalte der FIG 11 jeweils ein Differenzbild für einen Innenraum 3 eines Wagens 1 eines öffentlichen Verkehrsmittels, bei dem sich kein Objekt, d.h. kein Gegenstand, kein Tier oder keine Person im Innenraum 3 des Wagens 1 außer der Einrichtung befindet. Im Gegensatz dazu, zeigt die linke Spalte der FIG 11 ein erstes, ein drittes und ein fünftes Differenzbild 19, 21, 23, die jeweils für ein Bild einer Kamera eines Innenraums 3 eines Wagens 1 mit einem Objekt, das nicht Teil der Einrichtung des Innenraums des öffentlichen Verkehrsmittels ist, und dem auf Basis des Bildes der Kamera mithilfe des trainierten neuronalen Netz 14 rekonstruierten Bildes ermittelt wurden. Das Objekt kann **z.B.** eine Person oder zwei Personen darstellen. Anhand der Differenzbilder ist deutlich erkennbar, dass sich durch die Bildung der Differenzbilder, deutliche Unterschiede in den Differenzbildern für Bilder mit Objekt und für Bilder ohne Objekt ergeben. Bei jedem Differenzbild sind jeweils nur die Pixel des rekonstruierten weiteren Bildes 15, und des aufgenommenen weiteren Bildes 13 dargestellt, deren Helligkeitsunterschiede und/oder Farbunterschiede über einem vorgegebenen Schwellwert liegen.

Das erste, das dritte und das fünfte Differenzbild 19, 21, 23 der linken Spalte der FIG 11 zeigen den gleichen Innenraum des Wagens des öffentlichen Verkehrsmittels bei verschiedener Belichtung. In analoger Weise zeigen das zweite, das vierte und das sechste Differenzbild 20, 22, 24 den gleichen Innenraum des Wagens des öffentlichen Verkehrsmittels bei verschiedener Belichtung.

Das von der Verarbeitungseinheit 16 erstellte Differenzbild 19 wird anschließend einer zweiten Verarbeitungseinheit 18 zugeführt. Die zweite Verarbeitungseinheit 18 kann beispielsweise in Form eines trainierten Klassifikators ausgebildet sein.

Der Klassifikator ist in der Weise trainiert, dass er anhand eines Differenzbildes erkennen kann, ob sich im Innenraum eines öffentlichen Verkehrsmittels ein Objekt befindet oder nicht. Beispielsweise kann der Klassifikator in Form eines zweiten trainierten neuronalen Netzes 25 ausgebildet sein, wie in FIG 10 dargestellt ist. In dem dargestellten Ausführungsbeispiel weist das zweite neuronale Netz 25 eine erste Eingangsschicht 26 mit Neuronen auf, denen die einzelnen Bildpixel des Differenzbildes zugeführt werden. Jedes Neuron der Eingangsschicht 26 ist mit jedem Neuron einer versteckten Schicht 27 verbunden. Die Eingangsschicht 26 weist beispielsweise so viele Neuronen auf, wie das Differenzbild 19 Bildpixel aufweist. Die versteckte Schicht 27 kann mehr oder weniger Neuronen als die Eingangsschicht 26 aufweisen. Jedes Neuron der versteckten Schicht 27 ist mit dem einzigen Ausgangsneuron 28 verbunden. Das Ausgangsneuron 28 gibt einen Ausgangswert 29 aus, der angibt, ob und mit welcher Wahrscheinlichkeit es sich bei dem Differenzbild, um ein Differenzbild für einen Innenraum eines Wagens mit einem Objekt, das nicht Teil der Einrichtung des Innenraumes ist, oder ob und mit welcher Wahrscheinlichkeit es sich bei dem Differenzbild, um ein Differenzbild für einen Innenraum eines Wagens ohne ein Objekt, das nicht Teil der Einrichtung des Innenraumes ist, handelt.

Das zweite neuronale Netz 25 ist beispielsweise mit einem überwachten Lernverfahren mit entsprechenden gelabelten Differenzbildern daraufhin trainiert worden, ein Differenzbild für einen Innenraum mit einem Objekt, das nicht Teil der Einrichtung des Innenraumes ist, von einem Differenzbild für einen Innenraum ohne ein Objekt, das nicht Teil der Einrichtung des Innenraumes ist, unterscheiden zu können.

Der Ausgangswert 29 wird vom Computer 5 bei Vorliegen eines Differenzbildes für einen Innenraum mit einem Objekt, das nicht Teil der Einrichtung des Innenraumes ist, in ein entsprechendes Signal 17 umgewandelt und ausgegeben. Das Signal 17 kann elektrisch, optisch oder akustisch ausgegeben werden. Das Signal 17 kann beispielsweise als Ansage über einen Lautsprecher im Innenraum ausgegeben werden, die die Person auffordert, den Wagen zu verlassen. Zudem kann das Signal 17 als Anweisung an eine Bedienperson ausgegeben werden, die die Bedienperson anweist, den Wagen zu überprüfen und das Objekt aus dem Wagen zu entfernen.

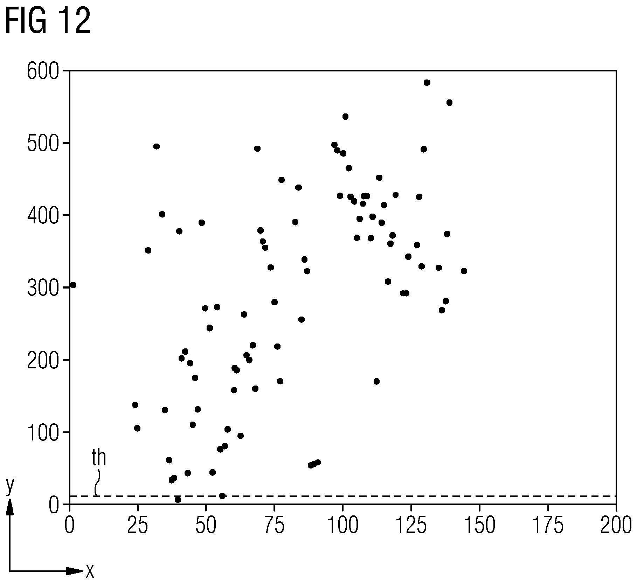

Abhängig von der gewählten Ausführungsform kann die zweite Verarbeitungseinheit 18 auch die im Differenzbild 19 dargestellten Pixel zählen. Beispielsweise zeigt FIG 12 ein Diagramm, bei dem entlang der X-Achse eine Nummer des Differenzbildes und entlang der y-Achse die Anzahl der abweichenden Pixel dargestellt ist. Zudem ist in dem Diagramm bei ungefähr 10 Pixel auf der y-Achse eine Schwelle th eingezeichnet. Überschreitet die Anzahl der abweichenden Pixel die Schwelle th, so wird das Differenzbild als Bild eines Innenraums eines Wagens mit einem Objekt bewertet. Entsprechend gibt die zweite Verarbeitungseinheit 18 ein Signal 17 aus. Liegt die Anzahl der abweichenden Pixel unter der Schwelle th, so wird das Differenzbild als Bild eines Innenraums ohne ein Objekt bewertet und es wird kein Signal 17 abgegeben. Die Schwelle th von 10 Pixel ist nur beispielhaft und kann auch andere Werte aufweisen.

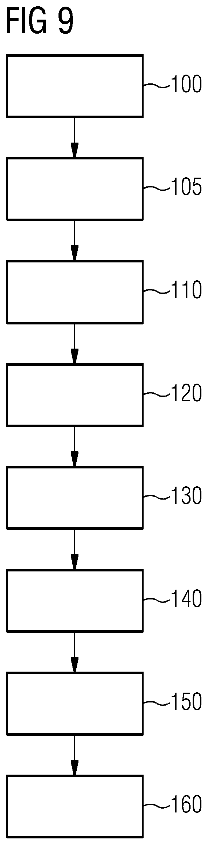

FIG 9 zeigt in einer schematischen Darstellung einen Programmablauf zur Durchführung des beschriebenen Verfahrens. Bei Programmpunkt 100, nimmt die Kamera 4 ein Bild des Innenraumes 3 des Wagens 1 des öffentlichen Verkehrsmittels auf. Anschließend wird das aufgenommene Bild 13 bei einem folgenden optionalen Programmschritt 105 vorverarbeitet, wobei das aufgenommene Bild 13 in der Größe reduziert wird. Dabei werden Bereiche des aufgenommenen Bildes 13 entfernt, die für die Überprüfung, ob sich ein Objekt, insbesondere ein Mensch, ein Tier oder ein Gegenstand, das nicht Teil der Einrichtung des Innenraumes des Wagens ist, unerheblich sind. Dabei kann wenigstens ein äußerer Randbereich des aufgenommen Bildes 13 abgeschnitten werden, wie anhand der FIG 2 bis 7 erläutert wurde. Beispielsweise können Randbereiche von allen vier Seiten des Bildes entfernt werden. Insbesondere können Randbereiche eines Bildes entfernt werden, die einen Bereich des Innenraumes darstellen, der über einer vorgegebenen Höhe gegenüber dem Boden des Wagens, insbesondere über einer vorgegebenen Höhe zwischen 1,5 m und 2 m, liegt. Damit werden auch kleine Personen erkannt, selbst wenn Bereiche eines Oberkörpers oder eines Kopfes nicht mehr vom Bild erfasst werden.

Bei einem folgendem Programmpunkt 110 wird das aufgenommene Bild 13 oder das vorbearbeitete Bild 13 einem trainierten neuronalen Netz 14 zugeführt. Das trainierte neuronale Netz 14 ist dahingehend trainiert, um für das zugeführte Bild 13 ein rekonstruiertes Bild 15 zu erzeugen. Das erste neuronale Netz 14 weist beispielsweise die Form eines gefalteten Autoencoders auf, wie anhand von FIG 8 erläutert wurde. Bei einem folgenden Programmpunkt 120 gibt das trainierte erste neuronale Netz 14 das rekonstruierte Bild 15 aus.

Anschließend werden bei einem folgenden Programm 130 das aufgenommene Bild 13 und das rekonstruierte Bild 15 miteinander verglichen, wobei ein Differenzbild erstellt wird. Bei dem Vergleich werden die einzelnen Pixel des aufgenommenen Bildes 13 mit den einzelnen Pixeln des rekonstruierten Bildes in Bezug auf die Helligkeit und/oder die Farbe miteinander verglichen. Überschreitet ein Pixel einen vorgegebenen Helligkeitsschwellwert und/oder einen vorgegebenen Farbschwellwert, so wird dasjenige Pixel als abweichendes Pixel erkannt, und in dem Differenzbild wiedergegeben. Nicht abweichende Pixel werden im Differenzbild nicht dargestellt. Abhängig von der gewählten Ausführungsform kann das abweichende Pixel im Differenzbild entweder nur als schwarzes Pixel auf weißem Hintergrund oder abhängig von dem Differenzwert zwischen dem Pixel des aufgenommenen Bildes 13 und dem Pixel des rekonstruierten Bildes 15 mit einem Grauwert darstellt werden.

Bei einem folgenden Programmpunkt 140 wird das Differenzbild analysiert und nach vorgegebenen Verfahren dahingehend überprüft, ob das Differenzbild ein Differenzbild eines Innenraums mit einem Objekt, das nicht Teil der Einrichtung des Innenraums des öffentlichen Verkehrsmittels ist, darstellt oder nicht. Dazu können verschiedene Verfahren verwendet werden. Beispielsweise kann dazu ein zweites trainiertes neuronales Netz oder ein trainierter Klassifikator verwendet werden. Das zweite trainierte neuronale Netz oder der Klassifikator sind dahingehend mit Differenzbildern trainiert worden, um ein Differenzbild eines Innenraumes mit einem Objekt, das nicht Teil der Einrichtung des Innenraums des öffentlichen Verkehrsmittels ist, von einem Differenzbild eines Innenraumes ohne ein Objekt, das nicht Teil der Einrichtung des Innenraums des öffentlichen Verkehrsmittels ist, unterscheiden zu können. Beispielsweise kann das zweite neuronale Netz gemäß der FIG 10 ausgebildet sein. Zudem kann gemäß einem weiteren Verfahren, das Vorliegen eines Differenzbildes für einen Innenraum mit einem Objekt dann von einer zweiten Verarbeitungseinheit 18 erkannt werden, wenn die Anzahl der abweichenden Pixel im Differenzbild einen vorgegebenen Schwellwert th überschreiten, wie anhand von FIG 12 erläutert wurde.

Bei einem folgenden Programmpunkt 150 gibt der Computer 5 ein Signal 17 aus, wenn ein Differenzbild für einen Innenraum mit einem Objekt, das nicht Teil der Einrichtung des Innenraums des öffentlichen Verkehrsmittels ist, erkannt wurde. Abhängig von der gewählten Ausführungsform, kann darauf bei Programmpunkt 160, nach Abgabe eines Signals 17, der Computer eine optische und/oder akustische Ausgabe im Innenraum 3 des Wagens 1 ausgeben, die beispielsweise eine Person auffordert, den Wagen zu verlassen. Zudem kann das Signal an eine Bedienperson weitergeleitet werden, mit dem Hinweis, den Wagen auf ein Objekt hin bzw. auf das Vorhandensein eines Tieres oder einer Person hin zu überprüfen.

Anschließend wird zu Programmpunkt 100 zurückverzweigt und erneut ein Bild, beispielsweise eines weiteren Wagens aufgenommen. Auf diese Weise können mehrere Wagen eines öffentlichen Verkehrsmittels von einem Computer 5, der beispielsweise zentral angeordnet ist, auf das Vorhandensein eines Objekts hin überprüft werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Wie hierin verwendet, entspricht ein Computer, ein Klassifikator, eine Verarbeitungseinheit 16 oder eine zweite Verarbeitungseinheit 18, z.B. einem Prozessor oder einem beliebigen elektronischen Gerät, das über Hardwareschaltungen, Software und/oder Firmware zur Verarbeitung von Daten konfiguriert ist. Beispielsweise können die hier beschriebenen Prozessoren einem oder mehreren (oder einer Kombination) eines Mikroprozessors, einer CPU oder einer anderen integrierten Schaltung (IC) oder einer anderen Art von Schaltung entsprechen, die in der Lage ist, Daten in einem Datenverarbeitungssystem zu verarbeiten. Es sollte verstanden werden, dass ein Prozessor, der so beschrieben oder beansprucht wird, dass er zur Ausführung eines bestimmten beschriebenen/beanspruchten Prozesses oder einer Funktion konfiguriert ist, einer CPU entsprechen kann, die Computer-/Prozessor-ausführbare Anweisungen ausführt, die in einem Speicher in Form von Software und/oder Firmware gespeichert sind, um einen solchen beschriebenen/beanspruchten Prozess oder eine solche Funktion auszuführen; und/oder einem IC entsprechen kann, der mit einer Verarbeitungsschaltung fest verdrahtet ist (z. B. ein FPGA oder ASIC IC), um einen solchen beschriebenen/beanspruchten Prozess oder eine solche Funktion auszuführen.

Es sollte auch verstanden werden, dass ein Computer oder Klassifikator, der so beschrieben oder beansprucht wird, dass er so konfiguriert ist, dass er einen bestimmten beschriebenen/beanspruchten Prozess oder eine Funktion ausführt, der einer Kombination des Computers oder Klassifikators mit Softwareanweisungen entsprechen kann, die in den beschriebenen Speicher (flüchtig und/oder nichtflüchtig) geladen/installiert sind, die gerade ausgeführt werden und/oder zur Ausführung durch den Computer oder Klassifikator zur Verfügung stehen, um den Computer oder Klassifikator zu veranlassen, den beschriebenen/beanspruchten Prozess oder die Funktion auszuführen. So kann ein Prozessor, der ausgeschaltet ist oder andere Software ausführt, aber die beschriebenen Softwareanweisungen auf einem Speichergerät in operativer Verbindung damit (wie eine Festplatte oder SSD) in einer Weise installiert hat, die so eingerichtet ist, dass sie vom Computer oder Klassifikator ausgeführt wird (wenn er von einem Benutzer, einer Hardware und/oder anderer Software gestartet wird), auch dem beschriebenen/beanspruchten Computer oder Klassifikator entsprechen, der so konfiguriert ist, dass er die hierin beschriebenen/beanspruchten besonderen Prozesse und Funktionen ausführt.

Der Speicher des Computers oder Klassifikators kann einem internen oder externen flüchtigen Speicher (z.B. Hauptspeicher, CPU-Cache und/oder RAM) entsprechen, der in dem Computer enthalten ist und/oder in operativer Verbindung mit dem Computer bzw. Klassifikator steht. Ein solcher Speicher kann auch einem nichtflüchtigen Speicher entsprechen (z.B. Flash-Speicher, SSD, Festplatte oder ein anderes Speichergerät oder nichttransitorisches computerlesbares Medium), der in operativer Verbindung mit dem Computer steht.

Der beschriebene Computer oder Klassifikator kann mindestens ein Eingabegerät und mindestens ein Anzeige- oder Ausgabegerät in operativer Verbindung mit dem Computer umfassen. Die Eingabevorrichtung kann beispielsweise eine Maus, eine Tastatur, einen Touchscreen, eine Gesteneingabevorrichtung oder eine andere Art von Eingabevorrichtung umfassen, die in der Lage ist, Benutzereingaben für den Computer oder den Klassifikator bereitzustellen. Die Anzeigevorrichtung kann beispielsweise einen LCD- oder AMOLED-Bildschirm, einen Monitor, ein am Kopf getragenes Display oder jede andere Art von Anzeigevorrichtung oder Ausgabevorrichtung umfassen, die in der Lage ist, Ausgaben des Computers oder Klassifikators anzuzeigen. Beispielsweise können der Computer oder Klassifikator, der Speicher, die Softwareanweisungen, die Eingabevorrichtung und die Anzeigevorrichtung als Teil eines Datenverarbeitungssystems enthalten sein, das einem PC, einer Workstation, einem Server, einem Notebook, einem Tablet, einem Mobiltelefon, einer kopfgetragenen Anzeige oder einer anderen Art von Computersystem oder einer beliebigen Kombination davon entspricht.

Der Computer oder Klassifikator kann auch einen oder mehrere Datenspeicher enthalten. Der Computer kann so konfiguriert sein, dass er Daten und/oder andere hierin beschriebene Informationen aus/in dem Datenspeicher verwaltet, abruft, erzeugt, verwendet, überarbeitet und speichert. Beispiele für einen Datenspeicher können eine Datei und/oder einen Datensatz umfassen, der in einer Datenbank (z. B. Oracle, Microsoft SQL-Server), einem Dateisystem, einer Festplatte, einer SSD, einem Flash-Laufwerk, einer Speicherkarte und/oder einer anderen Art von Gerät oder System gespeichert ist, das nichtflüchtige Daten speichert.

Es ist anzumerken, dass die Offenbarung zwar eine Beschreibung im Zusammenhang mit einem voll funktionsfähigen Computer oder Klassifikator und/oder einer Reihe von Handlungen enthält, dass aber Fachleute verstehen werden, dass zumindest Teile des Mechanismus der vorliegenden Offenbarung und/oder der beschriebenen Handlungen in Form von ausführbaren Computer-/Prozessoranweisungen (z. B. die beschriebenen Software-Befehle und/oder die entsprechenden Firmware-Befehle), die in einem nicht-transitorischen maschinenverwendbaren, computerverwendbaren oder computerlesbaren Medium in einer beliebigen Form enthalten sind, verteilt werden können, und dass die vorliegende Offenbarung gleichermaßen gilt, unabhängig von der besonderen Art des Befehls- oder Datenträgermediums oder Speichermediums, das zur tatsächlichen Durchführung der Verteilung verwendet wird. Beispiele für nicht-transitorische maschinenlesbare oder computerlesbare Medien sind: ROMs, EPROMs, Magnetbänder, Festplattenlaufwerke, SSDs, Flash-Speicher, CDs, DVDs und Blu-ray-Disks. Die vom Computer/Prozessor ausführbaren Anweisungen können eine Routine, eine Unterroutine, Programme, Anwendungen, Module, Bibliotheken und/oder Ähnliches umfassen. Ferner ist zu beachten, dass die ausführbaren Computer-/Prozessoranweisungen Quellcode, Bytecode, Laufzeitcode, Maschinencode, Assemblersprache, Java, JavaScript, Python, C, C#, C++ oder einer anderen Form von Code entsprechen und/oder daraus erzeugt werden können, der so programmiert/konfiguriert werden kann, dass er mindestens einen Prozessor veranlasst, die hierin beschriebenen Handlungen und Merkmale auszuführen. Weiterhin können die Ergebnisse der beschriebenen/geforderten Prozesse oder Funktionen in einem computerlesbaren Medium gespeichert, auf einer Anzeigevorrichtung angezeigt und/oder ähnlichem werden. Neuronale Netze und Modelle für maschinelles Lernen können in einem Rahmenwerk für maschinelles Lernen implementiert und eingesetzt werden, wie z. B. TensorFlow-Framework, Microsoft Cognitive Toolkit-Framework Rahmenwerk, Apache Singa Rahmenwerk oder Apache MXNet Rahmenwerk.

Es sollte auch gewürdigt werden, dass Geräte, die als Eingabegeräte oder Ausgabegeräte bezeichnet werden, sowohl Eingaben liefern als auch Ausgaben der Kommunikation mit dem Computer empfangen können. Zum Beispiel kann der Computer in ein Gehäuse (wie ein Tablet oder ein am Kopf getragenes Display) integriert sein, das einen Touchscreen enthält oder das in der Lage ist, Bewegungsgesteneingaben zu erfassen, die sowohl als Eingabe- als auch als Anzeigegerät dienen. Ferner ist zu beachten, dass einige Eingabegeräte eine Vielzahl verschiedener Arten von Eingabegeräten (z. B. Touchscreen, Touchpad und Tastatur) umfassen können.

Zusätzlich zu einem Kommunikationscontroller können weitere Geräte mit dem Computer verbunden sein, wie z.B. ein beliebiges lokales, Weitverkehrsnetz, Fernnetz, privates und/oder öffentliches Datenverarbeitungssystem oder eine Kombination von Netzen, wie sie dem Fachmann bekannt sind, einschließlich des Internets.

Darüber hinaus sollte man sich bewusst sein, dass Datenverarbeitungssysteme virtuelle Maschinen in einer virtuellen Maschinenarchitektur oder im Cloud-Raum enthalten können. Beispielsweise können der Computer und die zugehörigen Komponenten der Kombination eines oder mehrerer virtueller Maschinenprozessoren einer virtuellen Maschine entsprechen, die in einem oder mehreren physischen Prozessoren eines physischen Datenverarbeitungssystems arbeitet.

Es sollte auch beachtet werden, dass der hier beschriebene Computer einem entfernten Prozessor entsprechen kann, der sich in einem Datenverarbeitungssystem, wie einem Server befindet, der von den hier beschriebenen Anzeige- und Eingabegeräten entfernt ist. In einem solchen Beispiel können das beschriebene Anzeigegerät und das Eingabegerät in einem Client-Datenverarbeitungssystem enthalten sein (das seinen eigenen Prozessor haben kann), das mit dem Server (der den entfernten Prozessor enthält) über ein verdrahtetes oder drahtloses Netzwerk (das das Internet umfassen kann) kommuniziert. In einigen Ausführungsformen kann ein solches Client-Datenverarbeitungssystem beispielsweise eine Remote-Desktop-Anwendung ausführen oder einem Portalgerät entsprechen, das ein Remote-Desktop-Protokoll mit dem Server ausführt, um Eingaben von einem Eingabegerät an den Server zu senden und visuelle Informationen vom Server zur Anzeige über ein Anzeigegerät zu empfangen. Beispiele für solche Remote-Desktop-Protokolle sind das PCoIP von Teradici, das RDP von Microsoft und das RFB-Protokoll. In einem anderen Beispiel kann ein solches Client-Datenverarbeitungssystem einen Webbrowser oder eine Thin-Client-Anwendung ausführen. Die Eingaben des Benutzers können vom Webbrowser oder der Thin-Client-Anwendung übertragen werden, um auf dem Server ausgewertet zu werden, vom Server gerendert zu werden und ein Bild (oder eine Reihe von Bildern) an das Client-Datenverarbeitungssystem zurückzusenden, damit es vom Webbrowser oder der Thin-Client-Anwendung angezeigt wird. In einigen Beispielen kann der hier beschriebene Remote-Prozessor auch einer Kombination aus einem virtuellen Prozessor, einer virtuellen Maschine entsprechen, die in einem physischen Prozessor des Servers ausgeführt wird.

Wie hierin verwendet, sollen die Begriffe "Komponente" und "System" Hardware, Software oder eine Kombination aus Hardware und Software umfassen. So kann ein System oder eine Komponente zum Beispiel ein Prozess, ein auf einem Prozessor ausgeführter Prozess oder ein Prozessor sein.

Die Ausführungen zu dem Computer und zu dem Klassifikator treffen auch auf die Verarbeitungseinheit 15 und die zweite Verarbeitungseinheit 16 zu.

Außerdem kann eine Komponente oder ein System auf einem einzigen Gerät lokalisiert oder über mehrere Geräte verteilt sein.

Keine der Beschreibungen in der vorliegenden Anmeldung sollte so verstanden werden, dass ein bestimmtes Element, ein Schritt, eine Handlung oder eine Funktion ein wesentliches Element ist, das in den Anspruchsumfang aufgenommen werden muss: Der Umfang des patentierten Gegenstands wird nur durch die zugelassenen Ansprüche definiert. Darüber hinaus ist keiner dieser Ansprüche so zu verstehen, dass er sich auf eine Mittel-plus-Funktion-Anspruchskonstruktion beruft, es sei denn, die genauen Worte "Mittel für" werden von einem Partizip gefolgt.

**Patentansprüche**

1.   Computerimplementiertes Verfahren zum Erkennen eines Objektes in einem Innenraum eines öffentlichen Verkehrsmittels, das nicht Teil der Einrichtung des Innenraums des öffentlichen Verkehrsmittels ist,

    - wobei von einer Kamera ein Bild des Innenraumes des öffentlichen Verkehrsmittels aufgenommen wird, und
    - wobei bei Erkennen eines Objektes im Innenraum des öffentlichen Verkehrsmittels ein Signal ausgegeben wird,

    **dadurch gekennzeichnet,**

    - **dass** das aufgenommene Bild mithilfe eines trainierten neuronalen Netzes in ein rekonstruiertes Bild umgewandelt wird,
    - wobei das trainierte neuronale Netz als Autoencoder ausgebildet ist,
    - wobei das neuronale Netz mit Bildern des Innenraums ohne Objekte, die nicht Teil der Einrichtung des Innenraums des öffentlichen Verkehrsmittels sind, mit einem selbstlernenden Verfahren trainiert wurde, um aus einem aufgenommenen Bild ein rekonstruiertes Bild zu erzeugen, womit die Qualität des vom neuronalen Netz rekonstruierten Bildes eines Innenraumes mit einem Objekt, das nicht zur Einrichtung des Innenraumes gehört, schlechter ist,
    - wobei das rekonstruierte Bild mit dem aufgenommenen Bild verglichen wird,
    - wobei bei dem Vergleich des aufgenommenen Bildes mit dem rekonstruierten Bild ein pixelweiser Vergleich vorgenommen wird,
    - wobei bei dem Vergleich der zu vergleichenden Pixel des aufgenommenen Bildes und des rekonstruierten Bildes ein Helligkeitsunterschied und/oder ein Farbunterschied zwischen den Pixeln ermittelt wird,
    - wobei ein Pixel des rekonstruierten Bildes als abweichendes Pixel erkannt wird, wenn der Helligkeitsunterschied und/oder der Farbunterschied einen Schwellwert überschreitet,
    - wobei anhand der abweichenden Pixel ein Objekt im Innenraum des öffentlichen Verkehrsmittels erkannt wird, das nicht Teil der Einrichtung des Innenraums des öffentlichen Verkehrsmittels ist,
    - wobei ein Differenzbild, das die abweichenden Pixel aufweist, einem trainierten Klassifikator zugeführt wird,
    - wobei der Klassifikator trainiert wurde, um anhand der abweichenden Pixel eines Differenzbildes einen Innenraum eines öffentlichen Verkehrsmittels mit einem Objekt von einem Innenraum eines öffentlichen Verkehrsmittels ohne Objekt unterscheiden zu können,
- wobei der Klassifikator anhand des Differenzbildes bewertet, ob sich im Innenraum des öffentlichen Verkehrsmittels ein Objekt befindet oder nicht,
- wobei der Klassifikator als trainiertes zweites neuronales Netz ausgebildet ist,
- wobei das zweite neuronale Netz mit Differenzbildern mit Objekten und mit Differenzbildern ohne Objekte zum Erkennen eines Innenraumes mit Objekt trainiert wurde.

2. Verfahren nach Anspruch 1,

- wobei zum Trainieren des Klassifikators zum Unterscheiden zwischen einem Bild eines Innenraumes eines öffentlichen Verkehrsmittels ohne ein Objekt, das nicht Teil der Einrichtung des öffentlichen Verkehrsmittels ist, und einem Bild eines Innenraumes eines öffentlichen Verkehrsmittels mit einem Objekt, das nicht Teil der Einrichtung des öffentlichen Verkehrsmittels ist, ein überwachtes Lernen mit Differenzbilder verwendet wird,
- wobei ein Differenzbild zwischen einem aufgenommenen Bild und einem rekonstruierten Bild gebildet wird,
- wobei das Differenzbild durch einen pixelweisen Vergleich des aufgenommenen Bildes mit dem rekonstruierten Bild ermittelt wird,
- wobei bei dem Vergleich der zu vergleichenden Pixel des aufgenommenen Bildes und des rekonstruierten Bildes ein Helligkeitsunterschied und/oder ein Farbunterschied zwischen den Pixeln ermittelt wird,
- wobei ein Pixel des rekonstruierten Bildes als abweichendes Pixel erkannt wird und in das Differenzbild aufgenommen wird, wenn der Helligkeitsunterschied und/oder der Farbunterschied einen vorgegebenen Schwellwert überschreitet.

3. Verfahren nach einem der vorhergehenden Ansprüche,

- wobei das von der Kamera aufgenommene Bild, vor der weiteren Verarbeitung in der Anzahl der Pixel verkleinert wird,
- wobei wenigstens ein Bereich des Bildes, der außerhalb eines möglichen Aufenthaltsbereiches einer Person im Innenraum liegt, entfernt wird, und ein vorverarbeitetes Bild erhalten wird,
- wobei das Verfahren mit dem vorverarbeiteten Bild ausgeführt wird.

4. Verfahren nach einem der vorhergehenden Ansprüche,

- wobei bei der Vorverarbeitung ein Randbereich des aufgenommenen Bildes entfernt wird und dadurch ein vorverarbeitetes Bild mit weniger Pixel erhalten wird.

5. Verfahren nach einem der vorhergehenden Ansprüche,

- wobei vor der Verarbeitung des aufgenommenen Bildes Bereiche des aufgenommenen Bildes entfernt werden, die Bereiche des Innenraumes darstellen, die oberhalb einer vorgegebenen Höhe des Innenraumes liegen,
- wobei die vorgegebene Höhe zwischen 1,5 m Höhe und 2 m Höhe ausgehend von einem Boden des Innenraumes liegt.

6. Verfahren nach einem der vorhergehenden Ansprüche,

- wobei das Objekt einen Menschen darstellt.

7. Verfahren nach einem der vorhergehenden Ansprüche,

- wobei zum Trainieren vorverarbeitete Bilder verwendet wurden, bei denen Bereiche des Bildes entfernt wurden und dadurch das vorverarbeitete Bild weniger Pixel aufweist als das aufgenommene Bild.

8. Verfahren nach einem der vorhergehenden Ansprüche,

- wobei anhand einer Anzahl der abweichenden Pixel und/oder anhand von Positionen der abweichenden Pixel ein Objekt, das nicht Teil der Einrichtung des Innenraums des öffentlichen Verkehrsmittels ist, im Innenraum des öffentlichen Verkehrsmittels erkannt wird,
- wobei bei Erkennen des Objektes, das nicht Teil der Einrichtung des Innenraums des öffentlichen Verkehrsmittels ist, ein Signal ausgegeben wird.

9. Computer, der ausgebildet ist, eines der vorhergehenden Verfahren auszuführen.

10. Computerprogramm, das Befehle aufweist, die bei einer Ausführung auf einem Computer, ein Verfahren gemäß einem der Ansprüche 1 bis 8 ausführen.

11. Maschinenlesbares Speichermedium, auf dem das Computerprogramm nach Anspruch 10 gespeichert ist.

**Claims**

1. Computer-implemented method for detecting an object in an interior of a public means of transport which is not part of the facility of the interior of the public means of transport,

    - wherein an image of the interior of the public means of transport is captured by a camera, and
    - wherein a signal is output when an object is detected in the interior of the public means of transport,

    **characterised in that**

    - the captured image is converted into a reconstructed image with the aid of a trained neural network,
    - wherein the trained neural network is embodied as an autoencoder,
    - wherein the neural network was trained using a self-learning method with images of the interior without objects, which are not part of the facility of the interior of the public means of transport, in order to generate a reconstructed image from a captured image, whereby the quality of the image, reconstructed by the neural network, of an interior with an object, which does not form part of the facility of the interior, is worse,
    - wherein the reconstructed image is compared with the captured image,
    - wherein a pixel-by-pixel comparison is performed when the captured image is compared with the reconstructed image,
    - wherein when the pixels to be compared of the captured image and of the reconstructed image are compared, a difference in brightness and/or a difference in colour between the pixels is determined,
    - wherein a pixel of the reconstructed image is detected as an anomalous pixel if the difference in brightness and/or the difference in colour exceeds a threshold value,
    - wherein an object in the interior of the public means of transport, which does not form part of the facility of the interior of the public means of transport, is detected on the basis of the anomalous pixels,
    - wherein a differential image, which has the anomalous pixels, is fed to a trained classifier,
    - wherein the classifier was trained in order to be able to differentiate an interior of a public means of transport with an object from an interior of a public means of transport without an object on the basis of the anomalous pixels of a differential image,
    - wherein on the basis of the differential image the classifier evaluates whether or not an object is located in the interior of the public means of transport,
    - wherein the classifier is embodied as a trained second neural network,
    - wherein the second neural network was trained with differential images with objects and with differential images without objects in order to detect an interior with an object.

2. Method according to claim 1,

    - wherein in order to train the classifier so as to differentiate between an image of an interior of a public means of transport without an object, which is not part of the facility of the public means of transport, and an image of an interior of a public means of transport with an object, which is not part of the facility of the public means of transport, supervised learning with differential images is used,
    - wherein a differential image is formed between a captured image and a reconstructed image,
    - wherein the differential image is determined by a pixel-by-pixel comparison of the captured image with the reconstructed image,
    - wherein a difference in brightness and/or a difference in colour between the pixels is determined when the pixels to be compared of the captured image and the reconstructed image are compared,
    - wherein a pixel of the reconstructed image is detected as an anomalous pixel and captured in the differential image if the difference in brightness and/or the difference in colour exceeds a predetermined threshold value.

3. Method according to one of the preceding claims,

- wherein the size of the image captured by the camera is reduced in the number of pixels before further processing,
- wherein at least one region of the image, which lies outside of an area possibly occupied by a person in the interior, is removed, and a pre-processed image is obtained,
- wherein the method is carried out with the pre-processed image.

4. Method according to one of the preceding claims,

- wherein an edge region of the captured image is removed during the pre-processing and a pre-processed image with fewer pixels is obtained as a result.

5. Method according to one of the preceding claims,

- wherein before the processing of the captured image, regions of the captured image are removed, which display regions of the interior, which are above a predetermined height of the interior,
- wherein the predetermined height is between **1.5** m and 2 m in height as measured from a floor of the interior.

6. Method according to one of the preceding claims,

- wherein the object represents a person.

7. Method according to one of the preceding claims,

- wherein pre-processed images were used for training, in which regions of the image were removed and as a result the pre-processed image has fewer pixels than the captured image.

8. Method according to one of the preceding claims,

- wherein an object which is not part of the facility of the interior of the public means of transport is detected in the interior of the public means of transport on the basis of a number of anomalous pixels and/or on the basis of the positions of the anomalous pixels,
- wherein a signal is output when the object which is not part of the facility of the interior of the public means of transport is detected.

9. Computer which is embodied to carry out one of the preceding methods.

10. Computer program which has commands which, upon execution on a computer, carry out a method according to one of claims 1 to 8.

11. Machine-readable storage medium, on which the computer program according to claim 10 is stored.

**Revendications**

1. Procédé mis en œuvre par ordinateur d'identification d'un objet dans un espace intérieur d'un moyen de transport public, qui ne fait pas partie de l'agencement de l'espace intérieur du moyen de transport public,

- dans lequel on enregistre par une caméra une image de l'espace intérieur du moyen de transport public, et
- dans lequel à l'identification d'un objet dans l'espace intérieur du moyen de transport public, on émet un signal, **caractérisé**
- **en ce que** l'on transforme l'image enregistrée, à l'aide d'un réseau neuronal entraîné en une image reconstruite,
- dans lequel le réseau neuronal entraîné est constitué sous la forme d'un autocodeur,
- dans lequel on a entraîné par un procédé d'autoapprentissage le réseau neuronal par des images de l'espace intérieur sans des objets, qui ne font pas partie de l'agencement de l'espace intérieur du moyen de transport public, afin de produire, à partir d'une image enregistrée, une image reconstruite, la qualité de l'image reconstruite par le réseau neuronal d'un espace intérieur, ayant un objet, qui n'appartient pas à l'agencement de l'espace intérieur étant ainsi plus mauvaise,
- dans lequel on compare l'image reconstruite à l'image enregistrée,
- dans lequel, à la comparaison de l'image enregistrée à l'image reconstruite, on effectue une comparaison pixel par pixel,
- dans lequel, à la comparaison des pixels à comparer de l'image enregistrée et de l'image reconstruite, on détermine une différence de brillance et/ou une différence de couleur entre les pixels,
- dans lequel on identifie un pixel de l'image reconstruite comme un pixel déviant, si la différence de brillance et/ou la différence de couleur dépasse une valeur de seuil,
- à l'aide des pixels déviants, on identifie un objet dans l'espace intérieur du moyen de transport public, qui ne fait pas partie de l'agencement de l'espace intérieur du moyen de transport public,
- dans lequel on envoie à un classificateur entraîné, une image de différence, qui a les pixels déviants,
- dans lequel on a entraîné le classificateur, afin de pouvoir, à l'aide des pixels déviants d'une image de différence, distinguer un espace intérieur d'un moyen de transport public ayant un objet d'un espace intérieur d'un moyen de transport public sans objet,
- dans lequel le classificateur évalue, à l'aide de l'image de différence, s'il y a un objet dans l'espace intérieur du moyen de transport public ou s'il n'y en a pas,
- dans lequel le classificateur est constitué sous la forme d'un deuxième réseau neuronal entraîné,
- dans lequel on a, pour l'identification d'un espace intérieur ayant un objet, entraîné le deuxième réseau neuronal avec des images de différence ayant des objets et avec des images de différence sans objet.

2. Procédé suivant la revendication 1,

- dans lequel, pour l'entraînement du classificateur, afin de différencier entre une image d'un espace intérieur d'un moyen de transport public sans un objet, qui ne fait pas partie de l'agencement du moyen de transport public, et une image d'un espace intérieur d'un moyen de transport public ayant un objet, qui ne fait pas partie de l'agencement du moyen de transport public, on utilise un apprentissage contrôlé avec des images de différence,
- dans lequel on forme une image de différence entre une image enregistrée et une image reconstruite,
- dans lequel on détermine l'image de différence par une comparaison pixel par pixel de **l'image** enregistrée à **l'image** reconstruite,
- dans lequel, à la comparaison des pixels à comparer de l'image enregistrée et de l'image reconstruite, on détermine une différence de brillance et/ou une différence de couleur entre les pixels,
- dans lequel on identifie un pixel de l'image reconstruite comme pixel déviant et on l'enregistre dans l'image de différence, si la différence de brillance et/ou la différence de couleur dépasse une valeur de seuil donnée à l'avance.

3. Procédé suivant l'une des revendications précédentes,

- dans lequel on rapetisse en nombre des pixels, l'image enregistrée par la caméra avant le traitement ultérieur,
- dans lequel on retire au moins une partie de l'image, qui se trouve dans l'espace intérieur à l'extérieur d'une zone de séjour possible d'une personne et on obtient une image prétraitée,
- dans lequel on effectue le procédé avec l'image prétraitée.

4. Procédé suivant l'une des revendications précédentes,

- dans lequel, lors du prétraitement, on retire une zone marginale enregistrée et on obtient ainsi une image prétraitée ayant moins de pixels.

5. Procédé suivant l'une des revendications précédentes,

- dans lequel avant le prétraitement de l'image enregistrée, on élimine des zones de l'image enregistrée, qui représente des zones de l'espace intérieur, qui sont au-dessus d'une hauteur donnée à l'avance de l'espace intérieur,
- dans lequel la hauteur donnée à l'avance est comprise entre 1, 5 m et 2 m à partir du plancher de l'espace intérieur.

6. Procédé suivant l'une des revendications précédentes,

- dans lequel l'objet représente un homme.

**7.** Procédé suivant l'une des revendications précédentes,

- dans lequel on a utilisé pour l'entraînement des images prétraitées, dans lesquelles on a retiré des zones de l'image et ainsi l'image prétraitée a moins de pixels que l'image enregistrée.

**8.** Procédé suivant l'une des revendications précédentes,

- dans lequel, à l'aide d'un nombre des pixels déviants et/ou à l'aide de positions de pixels déviants, on identifie dans l'espace intérieur du moyen de transport public un objet, qui ne fait pas partie de l'agencement de l'espace intérieur du moyen de transport public,
- dans lequel, à la détection de l'objet, qui ne fait pas partie de l'agencement de l'espace intérieur du moyen de transport public, on émet un signal.

**9.** Ordinateur, qui est constitué, pour exécuter l'un des procédés précédents.

**10.** Programme d'ordinateur, qui a des instructions, qui, lors d'une exécution sur un ordinateur, exécute un procédé suivant l'une des revendications 1 à 8.

**11.** Support de mémoire déchiffrable par machine, sur lequel est mis en mémoire le programme de l'ordinateur suivant la revendication 10.

FIG 1

## FIG 2

1, 3

7

## FIG 3

31

33

34

35

8

32

FIG 4

FIG 5

## FIG 6

## FIG 7

FIG 8

## FIG 9

FIG 10

FIG 11

## FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020103354 A1

- WO 2021258664 A1

**In der Beschreibung aufgeführte Nicht-Patentliteratur**

- Autoencoder-based background reconstruction and foreground segmentation with background noise estimation. **BRUNO SAUVALLE et al.** ARXIV.ORG. CORNELL UNIVERSITY LIBRARY, 15 December 2021

- **SHERVIN MINAE et al.** Image Segmentation Using Deep Learning: A Survey. *ar Xiv:2001.05566v5*